# EUROPEAN PATENT APPLICATION

(11) **EP 4 116 575 A1**
(43) Date of publication of application: **11.01.2023**
(21) Application number: 21183934.5
(22) Date of filing: 06.07.2021
(51) Int. Cl.: F03D 1/06

(54) **METHOD FOR MANUFACTURING A ROOT SEGMENT OF A ROTOR BLADE OF A WIND TURBINE**

(71) Applicant: Siemens Gamesa Renewable Energy A/S, 7330 Brande (DK)
(72) Inventor: Krishna, Kiran, 560100 Bangalore (IN); Kavala, Venkateswara Rao, 560066 Bangalore (IN)
(74) Representative: SGRE-Association

(57) **Abstract**

The invention relates to a method (100) for manufacturing a root segment (3) of a rotor blade (1) of a wind turbine, whereby the method (100) comprises the steps of:
- providing multiple root segment sections (8a) of the root segment (3) to be manufactured;
- drilling first holes (5) into each one of the provided root segment sections (8a) to obtain drilled root segment sections (8b);
- arranging the multiple drilled root segment sections (8b) in a mold (30); and
- casting the multiple drilled root segment sections (8b) arranged in the mold (30) to obtain the root segment (3).

## Description

The invention relates to a method for manufacturing a root segment of a rotor blade of a wind turbine, a fixture for assisting in a method for manufacturing a root segment of a rotor blade of a wind turbine and a set comprising different fixtures.

After casting a rotor blade, it is required to drill holes into the root segment of the rotor blade such that blade root bolts and barrel nuts as attachment means may be fastened therein. The barrel nuts secure the bolts inside of the root segment and enable the connection of the rotor blade to the hub via the bolts at the connection face of the root segment.

Currently, the rotor blade is first demolded from the mold after casting and then moved to a machining shop floor on which an automated root drilling machine is then used to drill the required holes for the blade root barrel nuts and the bolts into the root segment of the rotor blade. These automated machines are not only expensive to purchase, they also require a long development time for different blade root diameters or, in other words, are not very flexible. In addition, their cost of maintenance is high and the space required for this drilling process is large.

It is an object of the invention to improve the way of drilling holes into the root segment of the rotor blade, in particular to provide a less expensive and more flexible way of drilling the holes required for connecting the rotor blade to the hub into the root segment.

This object is solved by the subject-matter of the claims. In particular, the object is solved by a method for manufacturing a root segment of a rotor blade of a wind turbine according to claim 1, a fixture for assisting in a method for manufacturing a root segment of a rotor blade of a wind turbine according to claim 11 and a set comprising different fixtures according to claim 15. Further details of the invention unfold from the other claims as well as the description and the drawings. Thereby, the features and details described in connection with the method of the invention apply in connection with the fixture of the invention and the set of the invention, so that regarding the disclosure of the individual aspects of the invention, it is or can be referred to one another.

According to a first aspect of the invention, the object is solved by a method for manufacturing a root segment of a rotor blade of a wind turbine. The method comprises the steps of:
- providing multiple root segment sections of the root segment to be manufactured;
- drilling first holes into each one of the provided root segment sections to obtain drilled root segment sections;
- arranging the multiple drilled root segment sections in a mold; and
- casting the multiple drilled root segment sections arranged in the mold to obtain the root segment.

Accordingly, the invention solves the above object by drilling first holes into the root segment sections prior to casting the root segment. It has been found that this method is very simple, inexpensive and flexible. Rather simple devices such as fixtures with drilling jigs, as will be explained in more detail later, may be used instead of the expensive and inflexible semi-automated or automated root drilling machine known from the prior art.

The root segment sections may have been manufactured in previous steps of the method as generally known in the art. The provided root segment sections may in particular be precasted root segment sections. A precasted root segment section is a premanufactured part.

Generally, casting is understood as the process of manufacturing a composite part from a matrix material and a reinforcement material. The casting may include the step of providing the reinforcement material, in particular in the form of multiple layers of fibrous material, such as glass fibers, carbon fibers and/or others, for example. Casting may further include the step of placing the reinforcement material on a mold, applying the matrix material to the reinforcement material, for example by means of an infusion process, and curing the matrix material. The matrix material may be an adhesive such as a resin, for example epoxy resin, or mix of different resins. The curing of the resin applied to the reinforcement material may be performed by means of heating or by applying a self-curing adhesive, for example.

The root segment sections may in particular have a round shape, i.e., be rounded, and moreover in particular have a partially circular or elliptical shape such that when they are casted together, they form the root segment or, in other words, root area or root portion of the (casted) rotor blade. Accordingly, the mold may have a cylindrical shape and/or a circular or elliptical cross section. Thereby, a cylindrically shaped root segment of the rotor blade may be manufactured. Then, the root segment has a cylindrical shape. The cross section of the root segment may have a circular or an elliptical shape of any size.

The root segment sections may be substantially equal parts. This means that the root segment sections substantially have equal material compositions, shapes and/or sizes. This simplifies the arrangement of the drilled root segment sections in the mold and thereby the manufacturing process. However, alternatively, the root segment sections may as well be of different material compositions, size and/or shape.

The multiple drilled root segment sections arranged in the mold may be casted together with a blade segment of the rotor blade to obtain the rotor blade. Thereby, the entire rotor blade having the root segment may be obtained rather than only casting the root segment and consecutively casting it with the blade segment, which forms the rest of the rotor blade but the root segment sections.

It may be provided that the first holes are being drilled substantially perpendicular to connection face portions of the root segment sections. When the root segment sections are arranged in the mold and casted, their connection face portions form the connection face of the root hub for connecting the rotor blade to the hub of the wind turbine. The connection face is facing the hub when the rotor blade is connected to the hub.

It may also be provided that the method further comprises the step of placing each one of the multiple root segment sections in a predetermined position on a first fixture such that the step of drilling the first holes is performed in the predetermined position. The first fixture may be supported on the ground. The first fixture not only gives support to the root segment sections while the drilling operation is performed, it also assures the predetermined position of the root segment sections for accurately drilling the first holes in their design position, which is the required position for consecutively connecting the rotor blade to the hub.

Note that the specific enumeration, such as first and second, of equally named components, such as the fixture, is used herein merely to distinguish the equally named components from one another. The enumeration of the different equally named components in no way is intended to limit the scope of the claims unless otherwise stated. For example, when a claim only refers to a first component but not to a second component, the scope of the claims merely requires the first component but not the second component to be present, too, unless it explicitly includes the second component.

It may further be provided that the step of drilling the first holes comprises usage of a first drilling jig. A drilling jig may also be referred to as a drilling template. It may be made from a plate, for example of a metal material, having holes therein indicating the accurate position for drilling the holes into the component, which in the case of the first drilling jig are the first holes of the root segment sections. The first drilling jig is a particularly simple device for ensuring correct drilling position and high accuracy during the step of drilling or, in other words, drilling operation.

It may moreover be provided that the first drilling jig is provided at the first fixture. In particular, the first drilling jig may be attached to the first fixture, for example by means of bolts. It is also possible that the first drilling jig is integrally formed with the first fixture, for example by means of welding or casting. By providing the first fixture with the first drilling jig, the root segment section placed on the first fixture is also placed in a predetermined position with respect to the first drilling jig. The first fixture with the first drilling jig may be configured such that the predetermined position of the root segment section placed on the first fixture is the only position in which the root segment section may be placed on the root segment section in such a way that the connection face portions of the root segment sections are aligned with the first drilling jig for the drilling operation. In particular, the connection face portions may be oriented parallel to the first drilling jig.

It may also be provided that the method further comprises the step of attaching the drilled root segment sections to the mold. The step of attaching the drilled root segment sections to the mold may be performed by fastening the drilled root segment sections to the mold via bolts inserted into the first holes of the drilled root segment sections. Thereby, a predetermined position of the drilled root segment sections and the drilled first holes in the mold is being achieved. Thereby, the drilled first holes in the root segment to be manufactured may be kept in a design or intended position provided by the mold. This design position is maintained during casting. Accordingly, it can be ensured that the first holes in the casted root segment are in their intended or design position. Using the already drilled first holes for arranging the root segment sections in the mold is particularly advantageous over the current procedure of the prior art. Typically, in the state of the art, additional holes are drilled perpendicular to the root segment sections to lift and position the root segment sections in the mold. This is disadvantageous with respect to the therewith involved effort, cost and loss of structural integrity.

The mold may comprise at least one root plate provided with holes for fastening the bolts thereto. The bolts may be secured against the at least one root plate for fastening the drilled root segment sections to the mold via the at least one root plate. The at least one root plate may have a round shape or circumference. In particular, the at least one root plate may be circular or part-circular in shape. For example, it is possible to use two root plates attached to respective fixtures. Both root plates may have a half-circular shape such that half of the entire root segment may be attached to each one of the root plates. Each one of these root plates may have separate fixtures configured for being supported on the ground. For example, the fixtures may have legs for supporting them on the ground.

It may further be provided that the method comprises the further step of drilling second holes transverse to and at least partially through the first holes in the root segment. The second holes may serve the purpose of inserting barrel nuts therein, while the first holes connected to the second holes may serve the purpose of inserting bolts therein, whereby the bolts may be connected to the barrel nuts via corresponding threads of the bolts and the barrel nuts. Different from drilling the first holes, the second holes are not drilled in the root segment sections but in the casted root segment or rotor blade.

Moreover, it may be provided that the drilling of the second holes comprises usage of a second fixture having a second drilling jig. The second drilling jig may be attached to the second fixture or integrally formed with the second fixture. The second drilling jig is a particularly simple device for ensuring correct drilling position and high accuracy during the step of drilling the second holes.

Further, it may be provided that the second fixture comprises a mounting arrangement mounting the second fixture on the root segment. The mounting arrangement may be attached to or integrally formed with the second fixture. The second fixture is different from the first fixture in that it is not supported on the ground but mounted on the root segment.

It may be provided that the mounting arrangement comprises alignment pins. The alignment pins may be spaced apart from the second drilling jig, and the alignment pins may be spaced apart from one another. And the alignment pins may be configured for being inserted into the first holes. The alignment pins and the second drilling jig may be configured such that when the alignment pins are inserted into the first holes, the holes in the second drilling jigs are positioned in line with the first holes for drilling the second holes. The alignment pins may be shorter than a length or depth of the first holes inside of the root segment such that the alignment pins are not drilled during the step of drilling the second holes. Thereby, the alignment pins enable the positioning of the second fixture and alignment of the second drilling jig required for drilling the second holes transverse to and at least partially through the first holes. Alternatively, or additionally, already drilled second holes may be used as alignment for drilling further second holes. By means of the mounting arrangement having the alignment pins, the drilling of the second holes is enabled in a highly precise manner avoiding production of scrap parts, which at the stage at which the root segment has already been casted would be very costly.

The mounting arrangement may also comprise one or multiple fixating devices, such as clamps, for example. The clamps may serve to fixate the mounting arrangement on the root segment because the alignment pins provide only the alignment. The clamps may thereby prevent the second drilling jig from being misaligned during the drilling operation.

The method may further include the steps of inserting barrel nuts into the second holes and bolts into the first holes. The bolts may be fastened to the barrel nuts by respectively corresponding threads on an outer side of the bolts and inside of the barrel nuts.

According to a second aspect of the invention, the initially stated object is solved by means of a fixture for assisting in a method for manufacturing a root segment of a rotor blade of a wind turbine. The fixture is configured for supporting at least one root segment section of the root segment to be manufactured in a predetermined position, or the fixture comprises a mounting arrangement configured for being mounted onto the root segment. Further, the fixture comprises a drilling jig for drilling holes into the root segment sections, or the root segment or the fixture comprises a root plate with holes for fastening the at least one (drilled) root segment section to the root plate via bolts and/or pins inserted through the holes of the root plate and holes inside of the at least one (drilled) root segment.

The fixture may in particular be configured for assisting in the method according to the first aspect of the invention.

A first configuration of such a fixture is that the fixture is configured for supporting a root segment section of the root segment to be manufactured in a predetermined position and that the fixture comprises a (first) drilling jig for drilling (first) holes into the root segment sections. The drilling jig on the fixture is configured such that the drilling jig of the fixture is aligned with the root segment section placed in the predetermined position of the fixture for drilling first holes into the root segment section to obtain a drilled root segment section. The fixture according to this first configuration is herein also referred to as the first fixture.

A second configuration of such a fixture is that the fixture is a mold configured for supporting multiple drilled root segment sections of the root segment to be manufactured in predetermined positions, in which the multiple drilled root segment sections form at least part of the root segment. The mold comprises a root plate with holes for fastening the drilled root segment sections to the root plate via bolts and/or pins inserted through the holes of the root plate and the (first) holes inside of the drilled root segment sections.

A third configuration of such a fixture is that the fixture comprises a mounting arrangement configured for being mounted onto the root segment and the fixture comprises a (second) drilling jig for drilling (second) holes into the root segment. The mounting arrangement comprises alignment pins, the alignment pins being spaced apart from the drilling jig and from one another, and the alignment pins being configured for being inserted into the first holes. The fixture according to this third configuration is herein also referred to as the second fixture.

According to a third aspect of the invention, the initially stated object is solved by a set comprising at least two different fixtures according to the second aspect of the invention. The two different fixtures are two different ones from the above described first, second or third configuration or, in other words, two different ones from the above first fixture, second fixture and the mold. The set may also include all three different configurations of the fixtures, i.e., the first fixture, the second fixture and the mold.

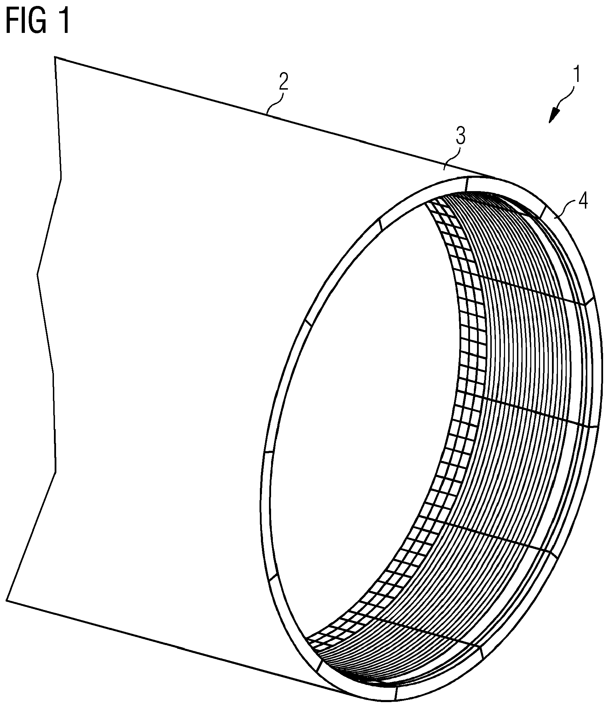

Further advantages, features and details of the invention unfold from the following description, in which by reference to the drawings of FIGS. 1 - 15, embodiments of the present invention are being described in detail. Thereby, the features from the claims as well as the features mentioned in the description can be essential for the invention as taken alone or in an arbitrary combination.

In the drawings, there is schematically shown:
- FIG. 1: a perspective view on a root segment of a rotor blade of a wind turbine,
- FIG. 2: a method of drilling holes into the root segment of the rotor blade of FIG. 1 according to the prior art,
- FIG. 3: a perspective view on the root segment of the rotor blade of FIG. 1 having holes drilled therein,
- FIG. 4: a perspective view on a connection means for attaching the root segment of the rotor blade of FIG. 3 to a hub of a wind turbine,
- FIG. 5: a perspective view on the root segment of the rotor blade of FIG. 3 having installed therein the connection means of FIG. 4,
- FIG. 6: a perspective view on a root segment section of a root segment of a rotor blade to be manufactured,
- FIG. 7: a perspective view on the root segment section placed in a predetermined position on a first fixture,
- FIG. 8: a perspective view on the root segment of FIG. 6 having first holes drilled therein,
- FIG. 9: a cross-section of the drilled root segment of FIG. 8 together with a drilled second hole,
- FIG. 10: an arrangement of multiple of drilled root segments according to FIG. 9 in a partial mold,
- FIG. 11: an arrangement of multiple of drilled root segments according to FIG. 9 in a full mold,
- FIG. 12: a root segment casted from the arrangement of FIG. 11,
- FIG. 13: a perspective view of a second fixture for drilling second holes inside of the casted root segment of FIG. 12,
- FIG. 14: a perspective view of the second fixture of FIG. 13 being mounted on the root segment of FIG. 12, and
- FIG. 15: a schematic representation of the steps of a method for manufacturing the root segment of the rotor blade of FIG. 3.

Same objects in FIGS. 1 - 15 are denominated with the same reference number.

FIG. 1 shows a portion of a rotor blade 1 for a wind turbine (not shown). The rotor blade 1 comprises a blade segment 2 extending from a root segment 3 to a tip (not shown) of the rotor blade 1, which is only shown partially in FIG. 1. At the root, the rotor blade 1 comprises the root section 3. The root section 3 has a cylindrical shape. The root section 3 has a connection face 4 with which it may be attached to a hub (not shown) of the wind turbine.

FIG. 1 shows the root segment 3 with no attachment means for attaching it to the hub. Typically, holes are drilled into the root segment 3 for later inserting barrel nuts and bolts therein for the connection with the hub as will be explained later.

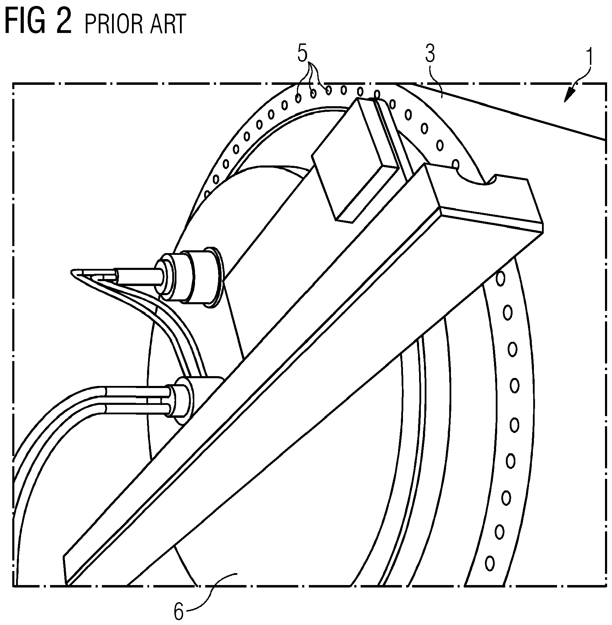

FIG. 2 shows the method of how the holes 5 are drilled into the root segment 3 in the prior art. An automated drilling root machine 6 is used in the prior art solution for drilling the hole 5. However, the semi-automated or automated drilling root machine 6 is expensive and inflexible.

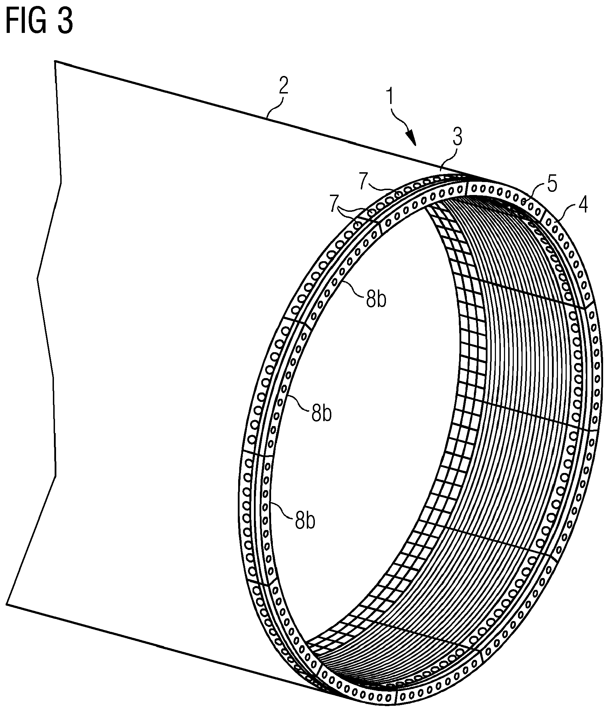

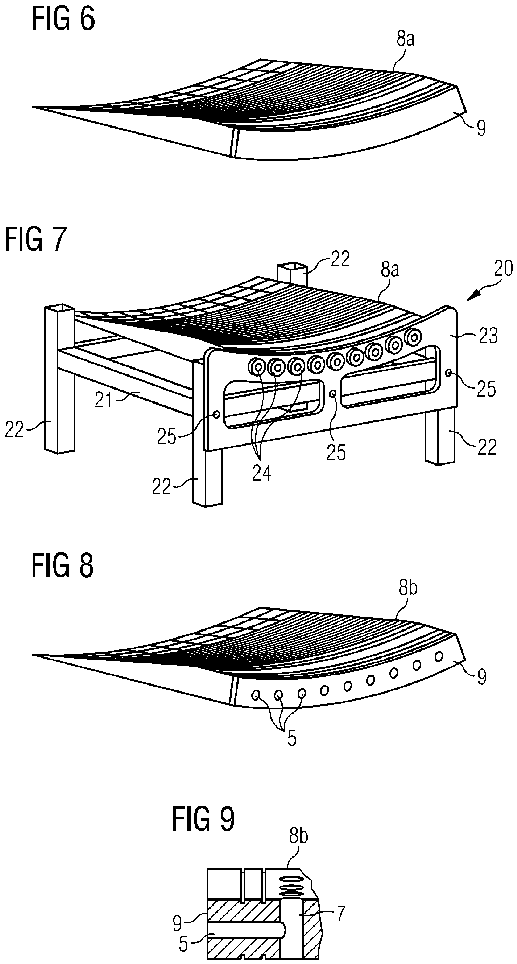

FIG. 3 shows the rotor blade 1 of FIG. 1 with first holes 5 and second holes 7. The first holes 5 extend along the length or, in other words, lengthwise of the rotor blade 1. In particular, the first holes 5 extend substantially perpendicular to connection face portions 9 (see FIG. 6) of the multiple drilled root segment sections 8b, from which the root segment 3 is composed or manufactured and which, taken all together, form the connection face 4.

The second holes 7 extend perpendicular to the length or, in other words, to the lengthwise direction of the rotor blade 1. As may also be seen in FIG. 9, the second holes 7 extend substantially perpendicular to the first holes 5 and partially through one another or, in other words, such that both, the first holes 5 and the second holes 7, are connected with each other.

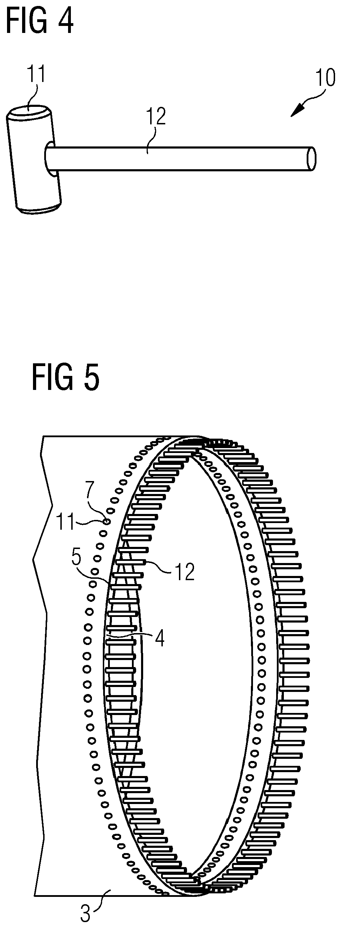

FIG. 4 shows the attachment means 10 consisting of barrel nut 11 and bolt 12 connected with one another as previously mentioned. The attachment means 10 serves the purpose of enabling the connection of the root segment 3 and thereby the rotor blade 1 to the hub of the wind turbine.

FIG. 5 shows how the barrel nuts 11 are inserted into the second holes 7 and connected via internal threads (not shown) of the barrel nuts 11 to external threads (not shown) of the bolts 12 inserted into the first holes 5. The free ends of the bolts 12 may serve for connecting them to the hub of the wind turbine.

FIG. 6 shows a single root segment section 8a with its connection face portion 9 as it is provided for casting the entire root segment 3 shown in FIG. 3. The root segment section 8a has a curved or partially circular shape. The root segment section 8a further is tapered in a direction away from the connection face portion 9.

FIG. 7 shows how the root segment sectiona 8 is being placed in a predetermined single or, in other words, unique position on a first fixture 20. The first fixture 20 has connection beams 21 holding together a set of legs 22 by means of which the fixture 20 is rested on a ground. The legs 22 are arranged at a distance from one another corresponding to a width of the root segment section 8a such that the root segment section 8a may exactly fit onto the first fixture 20 in the shown position. A first drilling jig 23 or, in other words, drilling template, is attached to the first fixture 20. The first drilling jig 23 is attached to the first fixture 20 by means of bolts 25.

The first drilling jig 23 has a row of holes 24 for drilling the first holes 5 into the root segment section 8a. The holes 24 of the first drilling jig 23 are spaced apart from one another and sized corresponding to the design position of the first holes 5 to be drilled inside of the root segment section 8a. The connection face portion 9 of the root segment section 8a is in a predetermined position opposite of the first drilling jig 23 for accurately drilling the first holes 5 in the desired locations of the root segment section 8a.

FIG. 8 shows the root segment section 8a as a drilled root segment section 8b having the first holes 5 after the drilling operation has been conducted while the root segment section 8a was placed in the predetermined position on the first fixture 20 of FIG. 7.

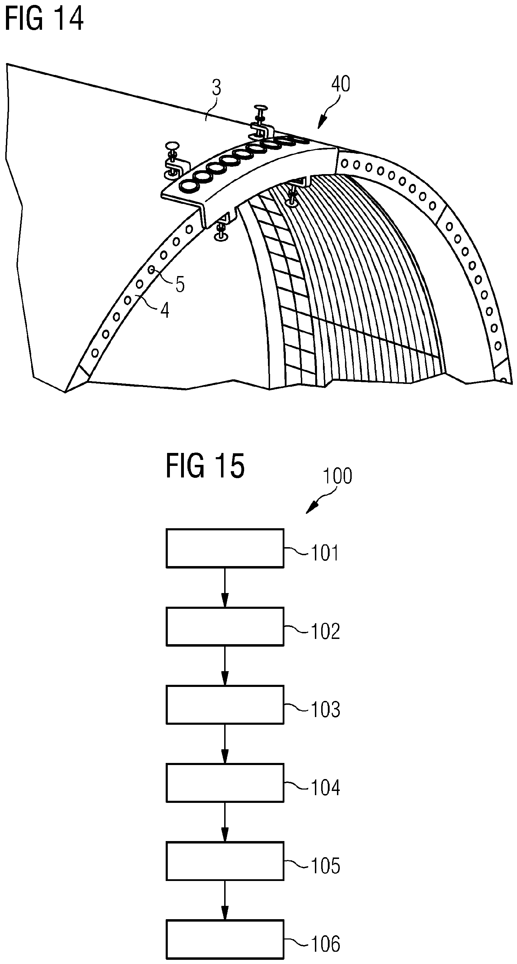

FIG. 9 shows the already mentioned orientation of a first hole 5 being perpendicular to a second hole 7 in extension. The first hole 5 is drilled as previously explained with reference to FIGS. 6 to 8, and the shown second hole 7 is only drilled later and as shown with reference to FIG. 14. The first hole 5 extends from the connection face portion 9 to the second hole 7 or inside of the second hole 7.

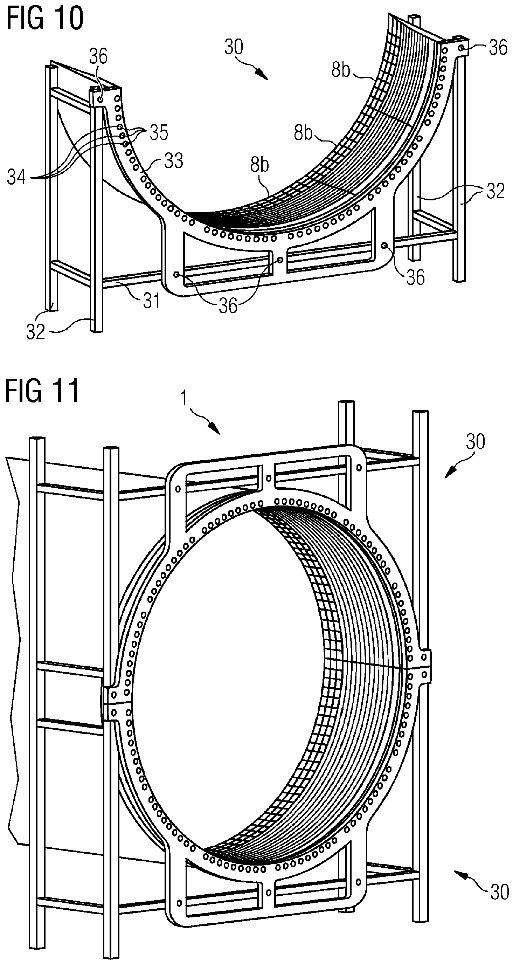

FIG. 10 shows multiple of the drilled root segment sections 8b of FIG. 8 secured to a mold 30. The mold 30 has connection beams 31 and a set of legs 32 similar to the first fixture 20 of FIG. 7. Beam 31 and legs 32 can be removed or folded once the drilled root segment sections 8b are secured to mold 30 and assembled to the mold 30.

The mold 30 comprises a root plate 33 having multiple holes 34 corresponding in position to or, in other words, being aligned with the first holes 5 of the drilled root segment sections 8b when these are being placed on the mold 30 as seen in FIG. 10. The root plate 35 is secured to the mold 30 by means of bolts 36.

To keep the drilled root segment sections 8b in an accurate predetermined position without risking that the first holes 5 are misaligned during casting of the root segment 3, the root plate 33 is bolted through holes 34 and inside of the first holes 5 to the drilled root segment sections 8b by using bolts and/or pins 35, which may be press-fit.

FIG. 10 shows a mold 30 for half of the root segment 3 to be manufactured. In FIG. 11, another half of the root segment 3 having the root segment sections 8 attached thereto is being placed on top of the mold 30 of FIG. 10. Now, both molds 30 together enable the casting of the root segment 3. The casting may be done separately from the blade segment 2 or together with the blade segment 2, as shown in FIG. 11. Also, the casting can be single shot in case of an integral rotor blade 1. Casting can also be done by casting two halves in case of a bonded blade.

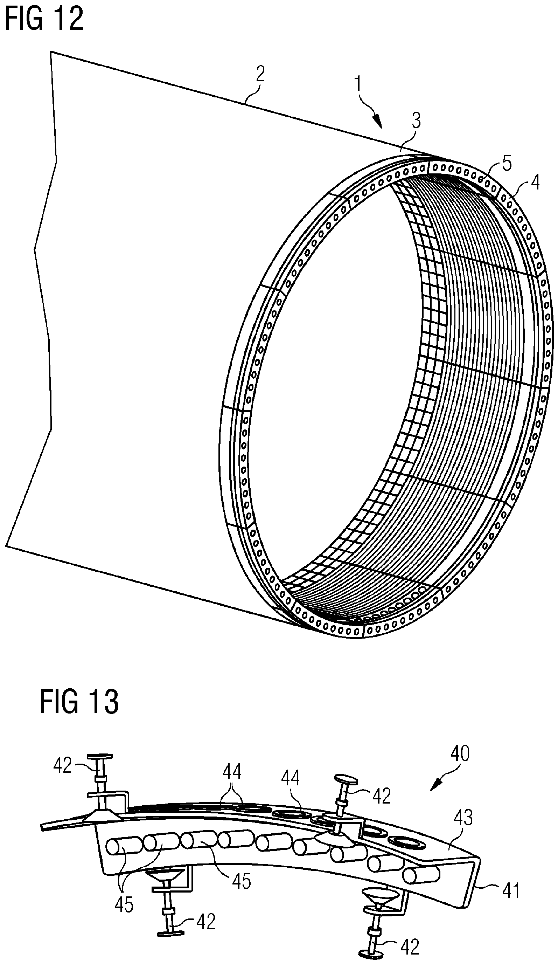

FIG. 12 shows the result of casting the rotor blade 1 shown in FIG. 11. The rotor blade 1 is provided as one part having the first holes 5 but not yet the second holes 7.

FIG. 13 shows a second fixture 40 for enabling accurate drilling of the second holes 7 inside of the casted root segment 3 such that the second holes 7 are oriented perpendicular to the first holes 5 and connect with them.

The second fixture 40 is not supported on the ground as is the case with the first fixture 20. Instead, the second fixture 40 is mounted on the root segment 3 as shown in FIG. 14, and the second holes 7 are drilled through the holes 44 provided in a second drilling jig 43 of the second fixture 40.

The second fixture 40 comprises a plate 41 at which the second drilling jig 43 is provided, in this exemplary case integrally formed. A number of alignment pins 45 is extending from the plate 41. The alignment pins 45 are designed to fit in the first holes 5 of the root segment 3. Accordingly, the pins 45 are sized to fit the first holes 5, and they have a distance from one another corresponding to the distance of the first holes 5 from one another. Moreover, the row of pins 45 follows a curved line corresponding to the curvature or circular shape of the root segment sections 8 and the first holes 5 provided therein.

The second fixture 40 is further provided with clamps 42. FIG. 13 shows four clamps 42, however, less or more than four clamps 42 may be used. Using at least four clamps 42 however is advantageous. It is possible to provide some of the clamps 42 on the second drilling jig 43 or extending therefrom, as seen in FIG. 13, and some of the clamps 42 on the plate 41 or extending therefrom. Accordingly, the clamps 42 on the second drilling jig 43 may secure the second fixture 40 from outside of the root segment 3 or on top of it, and the clamps 42 at the plate 41 may secure the second fixture 40 from inside of the root segment 3, as may be seen in FIG. 14.

The alignment pins 45 have a length shorter than the length of the first holes 5 such that the second holes 7 may be drilled in the root segment 3 without drilling through the alignment pins 45. The alignments pin 45 are aligned with the holes 44 in the second drilling jig 43 such that each central axis of an alignment pin 45 is perpendicular to a central axis of the hole 44.

FIG. 15 schematically shows the steps 101 - 106 of a method 100 for manufacturing the root segment 3 of the rotor blade 1 as shown in FIG. 3 and as previously explained with reference to FIGS. 4 - 14.

In the first step 101, multiple root segment sections 8a (see FIG. 6) of the root segment 3 to be manufactured are being provided.

In the second step 102, each one of the root segment sections 8a is consecutively placed on the first fixture 20 (see FIG. 7), and the first holes 5 are drilled inside of each of them.

Then, in the third step 103, the multiple drilled root segment sections 8b obtained in the previous step 102 are being arranged in the molds 30 (FIGS. 10 and 11). For this purpose, the drilled root segment sections 8b are being connected to the molds 30 via bolts 35 as previously explained.

Then, in the fourth step 104, the drilled root segment sections 8b attached to the mold 30 are casted together with the blade segment 2 to obtain the rotor blade 1.

In the fifth step 105, the second holes 7 are drilled into the root segment 3 of the rotor blade 1 as previously explained with reference to FIGS. 12 - 14.

Finally, in the sixth step 106, the attachment means 10 (FIG. 4) are provided inside of the first holes 5 and the second holes 7. Thereby, the rotor blade 1 is manufactured in a way such that it may now securely be connected to the hub of the wind turbine.

## Claims

1. Method (100) for manufacturing a root segment (3) of a rotor blade (1) of a wind turbine, whereby the method (100) comprises the steps of:
- providing multiple root segment sections (8a) of the root segment (3) to be manufactured;
- drilling first holes (5) into each one of the provided root segment sections (8a) to obtain drilled root segment sections (8b);
- arranging the multiple drilled root segment sections (8b) in a mold (30); and
- casting the multiple drilled root segment sections (8b) arranged in the mold (30) to obtain the root segment (3).

2. Method (100) according to claim 1, whereby the first holes (5) are being drilled substantially perpendicular to connection face portions (9) of the root segment sections (8a).

3. Method (100) according to claim 1 or 2, whereby the method (100) further comprises the step of placing each one of the multiple root segment sections (8a) in a predetermined position on a first fixture (20) such that the step of drilling the first holes (5) is performed in the predetermined position.

4. Method (100) according to any of the previous claims, whereby the step of drilling the first holes (5) comprises usage of a first drilling jig (23).

5. Method (100) according to claims 3 and 4, whereby the first drilling jig (23) is provided at the first fixture (20).

6. Method (100) according to any of the previous claims, whereby the method (100) further comprises the step of attaching the drilled root segment sections (8b) to the mold (30) by fastening the drilled root segment sections (8b) to the mold (30) via bolts and/or pins (35) inserted into the first holes (5) of the drilled root segment sections (8b).

7. Method (100) according to any of the previous claims, whereby the method (100) further comprises the further step of drilling second holes (7) transverse to and at least partially through the first holes (5) in the root segment (3).

8. Method (100) according to claim 7, whereby the drilling of the second holes (7) comprises usage of a second fixture (40) having a second drilling jig (43).

9. Method (100) according to claim 8, whereby the second fixture (40) comprises a mounting arrangement mounting the second fixture (40) on the root segment (3).

10. Method (100) according to claim 9, whereby the mounting arrangement comprises alignment pins (45), the alignment pins (45) being spaced apart from the second drilling jig (43) and from one another, and the alignment pins (45) being configured for being inserted into the first holes (5).

11. Fixture (20, 30, 40) for assisting in a method (100) for manufacturing a root segment (3) of a rotor blade (1) of a wind turbine, whereby the fixture (20, 30, 40) is configured for supporting at least one root segment section (8a, 8b) of the root segment (3) to be manufactured in a predetermined position, or the fixture (20, 30, 40) comprises a mounting arrangement configured for being mounted onto the root segment (3), and whereby the fixture (20, 40) comprises a drilling jig (23, 43) for drilling holes (5, 7) into the root segment sections (8a, 8b), or the root segment (3) or the fixture (30) comprise a root plate (33) with holes (34) for fastening the at least one drilled root segment section (8b) to the root plate (33) via bolts and/or pins (35) inserted through the holes (34) of the root plate (33) and holes (5) inside of the at least one drilled root segment section (8b).

12. Fixture (20) according to claim 11, whereby the fixture (20) is configured for supporting a root segment section (8) of the root segment (3) to be manufactured in a predetermined position, and whereby the drilling jig (23) on the fixture (20) is configured such that the drilling jig (23) of the fixture (20) is aligned with the root segment section (8a) placed in the predetermined position of the fixture (20) for drilling first holes (5) into the root segment section (8a) to obtain a drilled root segment section (8b).

13. Fixture (30) according to claim 11, whereby the fixture (30) is a mold (30) configured for supporting multiple root segment sections (8b) of the root segment (3) to be manufactured in predetermined positions, in which the multiple root segment sections (8b) form at least part of the root segment (3), and whereby the mold (30) comprises a root plate (33) with holes (34) for fastening the root segment sections (8b) to the root plate (33) via bolts and/or pins (35) inserted through the holes (34) of the root plate (33) and holes (5) inside of the root segment sections (8b).

14. Fixture (40) according to claim 11, whereby the mounting arrangement comprises alignment pins (45), the alignment pins (45) being spaced apart from the drilling jig (43) and from one another, and the alignment pins (45) being configured for being inserted into the first holes (5).

15. Set comprising at least two different fixtures (20, 30, 40) according to any of the previous claims 11 to 14.
